# EUROPEAN PATENT SPECIFICATION

(11) **EP 2 966 924 B1**
(45) Date of publication and mention of the grant of the patent: **20.12.2017**
(21) Application number: 13877319.7
(22) Date of filing: 24.12.2013
(51) Int. Cl.: H04W 72/10, H04W 76/02

(54) **SERVICE DATA TRANSMISSION PROCESSING, TRANSMISSION METHOD AND DEVICE**
VERFAHREN UND VORRICHTUNG ZUR ÜBERTRAGUNG UND ZUR VERARBEITUNG DER ÜBERTRAGUNG VON SERVICEDATEN
PROCÉDÉ ET DISPOSITIF DE TRANSMISSION ET DE TRAITEMENT DE TRANSMISSION DE DONNÉES DE SERVICE

(30) Priority: 08.03.2013 CN 201310074676
(43) Date of publication of application: 13.01.2016
(73) Proprietor: ZTE Corporation, Shenzhen, Guangdong 518057 (CN)
(72) Inventor: SUN, Bo, Shenzhen Guangdong 518057 (CN); LV, Kaiying, Shenzhen Guangdong 518057 (CN); ZHANG, Li, Shenzhen Guangdong 518057 (CN); HAN, Zhiqiang, Shenzhen Guangdong 518057 (CN)
(74) Representative: Carangelo, Pierluigi
(86) International application number: PCT/CN2013/090327
(87) International publication number: WO 2014/134954

(56) References cited:
- EP-A1- 1 655 894
- WO-A2-2010/002208
- CN-A- 101 132 220
- CN-A- 101 330 313
- CN-A- 101 621 777
- SASSAN AHMADI AND ROSHNI M SRINIVASAN INTEL CORPORATION HOKYU CHOI ET AL: "Proposed Changes/Refinements to the Section 10 of IEEE 802.16m SDD ; C80216m-09_1197r1", IEEE DRAFT; C80216M-09_1197R1, IEEE-SA, PISCATAWAY, NJ USA, vol. 802.16m, no. r1, 3 July 2009 (2009-07-03), pages 1-27, XP017798260, [retrieved on 2009-07-13]

## Description

### Technical Field

The present disclosure relates to the field of communications, particularly to a service data transmission processing method and device, and a service data transmission method and device.

### Background

At present, demands for Wireless Local Area Network (WLAN) applications are growing with the rapid development of WLAN in the field of wireless networks. The most common WLAN technologies of a series of standards including 802.11a, 802.11b, 802.11g and so on have been defined one after another in the Institute of Electrical and Electronics Engineers (IEEE) industrial specification 802.11 group, and other task groups have emerged successively afterwards to concentrate on developing specifications related to improvement of existing 802.11 technologies. Among these task groups, the 802.11ah task group mainly formulates standards for a WLAN air interface using an unlicensed band below 1GHz to support new network applications including an intelligent electric grid, a sensor network and so on.

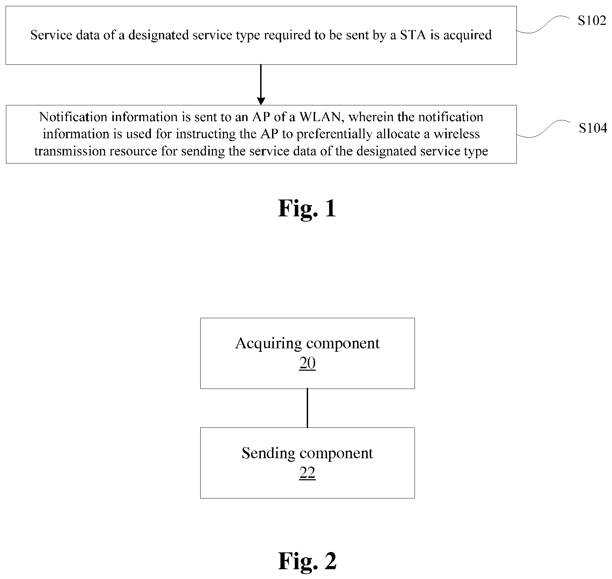

A basic architecture of a WLAN refers to a Basic Service Set (BSS), including one Access Point (AP) and a plurality of Stations (STA) associated with the AP, and a specific architecture may refer to Fig. 1. Two operation modes, i.e. a Distribution Coordination Function (DCF) and a Point Coordination Function (PCF), and improvement for these two operation modes, i.e. Enhanced Distributed Channel Access (EDCA) and Hybrid Coordination Function Controlled Channel Access (HCCA) have been defined in 802.11. Among the above operation modes, the DCF, which is the most fundamental operation mode, enables a plurality of STAs to share a wireless channel by using a Carrier Sense Multiple Access with Collision Avoidance (CSMA/CA) mechanism; while the EDCA, which is an enhanced operation mode based on the CSMA/CA mechanism, supports a plurality of queues having different priorities to share a wireless channel and uses a Transmission Opportunity (TXOP) as an element to send data of the queue of each priority.

A WLAN is able to provide a larger coverage when using an unlicensed band resource below 1 GHz, which also poses a challenge to the capability of a terminal in saving power. An existing mode of saving power refers to that a terminal in the mode of saving power awakes regularly to monitor whether there is to-be-sent downlink data of the terminal in a Beacon frame. A WLAN terminal may use a mode of saving power for a longer period of time in order to further prolong the using time of the WLAN terminal. This mode of saving power for a longer period of time refers to that, when there is no other local data to be sent after current transmission is completed, the terminal turns off a WLAN transceiver component and enters a sleep state until there is new local data to be sent or the sleep time reaches a preset value. On the other hand, a WLAN using an unlicensed band below 1 GHz is mainly applied to intelligent meter reading and a sensor network. A terminal is in a mode of saving power most of the time in some applications such as fire alarming and gas monitoring in order to save power, while a sensor terminal needs to send out abnormal data as soon as possible once they are detected.

In an existing solution, in order to ensure reliable transmission of uplink data, a terminal in a mode of saving power monitors a wireless channel first after new local data arrives, and sends a wireless frame to an AP after detecting that a signal can be sent via the wireless channel, to notify the AP that there is uplink data to be sent. The AP allocates a time slot for uplink transmission to the terminal according to uplink data indication carried in the wireless frame. However, the data to be sent by the terminal may be a common service, and may also be an emergency service such as an abnormality alarm. The AP, which fails to distinguish the priorities of these burst data, can only process the burst data in a sequence of arrival of their respective sending requests, which will cause a transmission delay of the emergency burst data.

At present, there is no effective solution for the problem in the related art.

EP1655894A1, "Proposed Changes/Refinements to the Section 10 of IEEE 802.16m SDD; C80216m_1197r1", and WO2010002208A2 provide respective technical solutions; however, the above mentioned problem still remains unsolved.

### Summary

Aiming at the technical problems of a delay in sending emergency burst data due to the fact that an AP fails to identify the priority of the burst data during the sending of the emergency service data in the related art, a service data transmission processing method and device, and a service data transmission method and device are provided by embodiments of the present disclosure to at least solve the problems.

A service data transmission processing method is provided according to an embodiment of the present disclosure, applied to a STA of a WLAN and including that service data required to be sent by the STA is acquired, wherein the service data is of a designated service type; notification information is sent to an AP of the WLAN, wherein the notification information is used for instructing the AP to preferentially allocate a wireless transmission resource for sending the service data of the designated service type.

In an example embodiment, the operation that the notification information is sent to the AP includes that a transmission channel for sending the service data of the designated service type is determined; a channel state of the transmission channel is detected; the notification information is sent to the AP when it is detected that the channel state is idle.

In an example embodiment, the operation that the notification information is sent to the AP when it is detected that the channel state is idle includes that the notification information is sent to the AP when it is detected that the channel state is idle in a designated period of time and/or a random period of time.

In an example embodiment, the operation that the notification information is sent to the AP includes that a wireless frame sent by the AP is received; the notification information is sent to the AP after a first interframe spacing has elapsed from the reception of the wireless frame.

In an example embodiment, the operation that the notification information is sent to the AP includes that a designated time slot of the AP is acquired; the notification information is sent to the AP after the designated time slot.

In an example embodiment, after the notification information is sent to the AP, the method includes that a response message from the AP is received, wherein the response message is used for instructing the STA to send the service data of the designated service type according to a preset condition.

In an example embodiment, the preset condition includes at least one of the followings: the service data of the designated service type is send after a second preset interframe spacing has elapsed from the reception of the response message; the service data of the designated service type is sent after a preset period of time; the service data of the designated service type is sent after a designated wireless frame from the AP is received.

In an example embodiment, the notification information carries priority information for indicating a priority of the service data of the designated service type among different designated service types, wherein the priority information is used for indicating a priority for allocating the wireless transmission resource for the service data among service data of different priorities.

In an example embodiment, the notification information is sent by the following manner: the notification information is sent at one or more preset information bits or one or more preset signaling bits of a designated wireless frame.

In an example embodiment, the designated wireless frame includes: a short wireless frame, wherein the short wireless frame only includes a frame header of a physical layer or an End of frame of a physical layer.

In an example embodiment, the one or more preset information bits or one or more preset signaling bits are set at the frame header of the physical layer.

A service data transmission method is provided according to another embodiment of the present disclosure, applied to an AP of a WLAN and including that: notification information is received from a STA of the WLAN, wherein the notification information is used for instructing the AP to preferentially allocate a wireless transmission resource for sending service data of a designated service type; the wireless transmission resource for sending the service data of the designated service type is allocated according to the notification information.

In an example embodiment, after the notification information is received from the STA, the method includes that a response message of the notification information is sent to the STA, wherein the response message is used for instructing the STA to send the service data of the designated service type according to a preset condition.

In an example embodiment, the preset condition includes at least one of the followings: the service data of the designated service type is send after a second preset interframe spacing has elapsed from the reception of the response message; the service data of the designated service type is sent after a preset period of time; the service data of the designated service type is sent after a designated wireless frame from the AP is received.

In an example embodiment, when the service data of the designated service type is sent after the preset period of time, the method further includes that a designated wireless frame is sent to the STA, wherein the designated wireless frame is used for instructing the STA to send the service data of the designated type after a designated period of time has elapsed from the reception of wireless frame.

In an example embodiment, the notification information carries priority information for indicating a priority of the service data of the designated service type among different designated service types, wherein the priority information is used for indicating a priority for allocating the wireless transmission resource for the service data among service data of different priorities.

A service data transmission processing device is provided according to still another embodiment of the present disclosure, applied to a STA of a WLAN and including: an acquiring component, configured to acquire service data required to be sent by the STA, wherein the service data is of a designated service type; a sending component, configured to send notification information to an AP of the WLAN, wherein the notification information is used for instructing the AP to preferentially allocate a wireless transmission resource for sending the service data of the designated service type.

In an example embodiment, the sending component includes: a determining element, configured to determine a transmission channel for sending the service data of the designated service type; a detecting element, configured to detect a channel state of the transmission channel; a first sending element, configured to send the notification information to the AP when the detecting element detects that the channel state is idle.

In an example embodiment, the first sending element is configured to send the notification information to the AP when it is detected that the channel state is idle in a designated period of time and/or a random period of time.

In an example embodiment, the sending component includes: a receiving element, configured to receive a wireless frame sent by the AP; a second sending element, configured to send the notification information to the AP after a first interframe spacing has elapsed from the reception of the wireless frame.

In an example embodiment, the sending component includes: an acquiring element, configured to acquire a designated time slot of the AP; a third sending element, configured to send the notification information to the AP after the designated time slot.

In an example embodiment, the device further includes: a receiving component, configured to receive a response message from the AP, wherein the response message is used for instructing the STA to send the service data of the designated service type according to a preset condition.

A service data transmission device is provided according to still another embodiment of the present disclosure, applied to an AP of a WLAN and including: a receiving component, configured to receive notification information from a STA of the WLAN, wherein the notification information is used for instructing the AP to preferentially allocate a wireless transmission resource for sending service data of a designated service type; an allocating component, configured to allocate, according to the notification information, the wireless transmission resource for sending the service data of the designated service type.

In an example embodiment, the device further includes: a sending component, configured to send a response message of the notification information to the STA, wherein the response message is used for instructing the STA to send the service data of the designated service type according to a preset condition.

By means of the present disclosure, a technical means of sending notification information for instructing an AP to preferentially allocate a wireless transmission resource for sending service data of a designated service type before sending the service data of the designated service type is applied to solving technical problems including a delay in sending emergency burst data due to the fact that an AP fails to identify the priority of the burst data during the sending of the emergency service data in the related art, thereby reducing the transmission delay of the emergency service data while improving the success rate of burst transmission of the emergency service data.

### Brief Description of the Drawings

The accompanying drawings illustrated herein are used for providing further understanding to the present disclosure and constitute a part of the application. The exemplary embodiments of the present disclosure and illustration thereof are used for explaining the present disclosure, instead of constituting improper limitation to the present disclosure. In the accompanying drawings:
Fig. 1 is a flowchart of a service data transmission processing method according to the first embodiment of the present disclosure;
Fig. 2 is a structural block diagram of a service data transmission processing device according to the first embodiment of the present disclosure;
Fig. 3 is another structural block diagram of a service data transmission processing device according to the first embodiment of the present disclosure;
Fig. 4 is a flowchart of a service data transmission method according to the second embodiment of the present disclosure;
Fig. 5 is a structural block diagram of a service data transmission device according to the second embodiment of the present disclosure;
Fig. 6 is another structural block diagram of a service data transmission device according to the second embodiment of the present disclosure;
Fig. 7 is a schematic diagram illustrating a structure of a WLAN system according to an embodiment of the present disclosure;
Fig. 8 is another schematic diagram illustrating a structure of a WLAN system according to an embodiment of the present disclosure;
Fig. 9 is a schematic diagram of a switching time sequence of wireless frames according to the third embodiment of the present disclosure;
Fig. 10 is a schematic diagram of a switching time sequence of wireless frames according to the fourth embodiment of the present disclosure;
Fig. 11 is a schematic diagram of a switching time sequence of wireless frames according to the fifth embodiment of the present disclosure; and
Fig. 12 is a schematic diagram of a switching time sequence of wireless frames according to the sixth embodiment of the present disclosure.

### Detailed Description of the Embodiments

The present disclosure will be expounded hereinafter with reference to the accompanying drawings and in conjunction with the embodiments. It needs to be noted that the embodiments in the application and the characteristics in the embodiments may be combined with each other if there is no conflict.

### Embodiment 1

Fig. 1 is a flowchart of a service data transmission processing method according to the first embodiment of the present disclosure. The method is applied to a STA in a WLAN. As shown in Fig. 1, the method includes the following steps.

Step 102: service data required to be sent by the STA is acquired, wherein the service data is of a designated service type.

Step 104: notification information is sent to an AP of the WLAN, wherein the notification information is used for instructing the AP to preferentially allocate a wireless transmission resource for sending the service data of the designated service type.

By means of the foregoing processing steps, the notification information for instructing the AP to preferentially allocate the wireless transmission resource for sending the service data of the designated service type is sent to the AP before the service data of the designated service type is sent, so that the AP is able to learn that the STA needs to send service data of the designated service type, and thus preferentially allocate the transmission resource for sending the service data of the designated service type, thereby reducing a transmission delay of the service data of the designated service type.

The notification information may be sent by many methods in the embodiment, such as several methods as follows.

### Method 1

A transmission channel for sending the service data of the designated service type is determined; a channel state of the transmission channel is detected; the notification information is sent to the AP when it is detected that the channel state is idle. In this method, the STA may contend for the channel via a CSMA/CA mechanism. As an example, the fact that the channel state is idle, i.e. the idle state manifest as the following forms: the channel state is idle in a designated period of time and/or a random period of time.

### Method 2

A wireless frame sent by the AP is received and the notification information is sent to the AP after a first interframe spacing has elapsed from the reception of the wireless frame.

### Method 3

A designated time slot of the AP is acquired and the notification information is sent to the AP after the designated time slot.

It needs to be noted that the three foregoing methods for sending the notification information may be combined with each other, and a combination order may be determined according to a practical requirement. For example, the first method is applied first, and then the second method and/or the third method are/is applied in turn, or the second method is applied first, and then the first method and/or the third method are/is applied, and so on, and repeated description will not be provided here.

In the embodiment, the timing for sending the service data of the designated service type may be determined according to an indication message of the AP. Specifically, a response message from the AP is received after the notification information is sent to the AP, wherein the response message is used for instructing the STA to send the service data of the designated service type according to a preset condition.

In the embodiment, the preset condition may be indication of immediate sending, and may also include, but is not limited to at least one of the followings. (1) The service data of the designated service type is send after a second preset interframe spacing has elapsed from the reception of the response message. Specifically, the AP instructs in the response message that the STA needs to wait for a period of time. Further, the STA sends burst data of an emergency service immediately after receiving the response message, waiting for the instructed period of time, and acquiring an opportunity of sending over a channel by using the CSMA/CA mechanism. (2) The service data of the designated service type is sent after a preset period of time. (3) The service data of the designated service type is sent after a designated wireless frame from the AP is received. It needs to be noted that the three preset conditions may be used in combination, including but not limited to a combination of two or three of the preset conditions. For example, after receiving the response message (a response frame), the STA sends burst data of an emergency service immediately after a preset interframe spacing; or after a delay T, the AP sends a synchronization or trigger frame first, and the STA sends the service data of the designated service type (e.g. emergency service data) after a preset interframe spacing.

In the embodiment, the service data of the designated service type may be prioritized, which may be specifically implemented by, but not limited to the following methods: the notification information carries priority information for indicating a priority of the service data of the designated service type among different designated service types, wherein the priority information is used for indicating a priority for allocating the wireless transmission resource for the service data among service data of different priorities.

In the embodiment, the notification information may be sent via a dedicated message for sending the notification information, and may be also sent via a designated wireless frame. When send by applying the first method, the notification information may be sent at one or more preset information bits or one or more preset signaling bits of a designated wireless frame. The one or more preset information bits or preset signaling bits may be used for indicating a priority of the service data of the designated service type (e.g. burst data of an emergency service).

In the embodiment, the designated wireless frame may include, but is not limited to a short wireless frame, wherein the short wireless frame only includes a frame header of a physical layer or an End of frame of a physical layer. The one or more preset information bits or one or more preset signaling bits are set at the frame header of the physical layer.

The embodiment further provides a service data transmission processing device. The device is applied to a STA of a WLAN to implement the embodiments and example embodiments, and what has been described will not be repeated. Components involved in the device will be described below. As used below, the term "component" can implement a combination of software and/or hardware with predetermined functions. Although the device described by the following embodiments is preferably implemented by software, hardware or a combination of software and hardware is also possible and conceived. Fig. 2 is a structural block diagram of a service data transmission processing device according to the first embodiment of the present disclosure. As shown in Fig. 2, the device includes:
an acquiring component 20, coupled with a sending component 22 and configured to acquire service data required to be sent by the STA, wherein the service data is of a designated service type;
the sending component 22, configured to send notification information to an AP of the WLAN, wherein the notification information is used for instructing the AP to preferentially allocate a wireless transmission resource for sending the service data of the designated service type.

Through functions implemented by the foregoing components, the AP is able to learn that the STA needs to send service data of a designated service type, and thus preferentially allocate the transmission resource for sending the service data of the designated service type, so as to reduce a transmission delay of the service data of the designated service type.

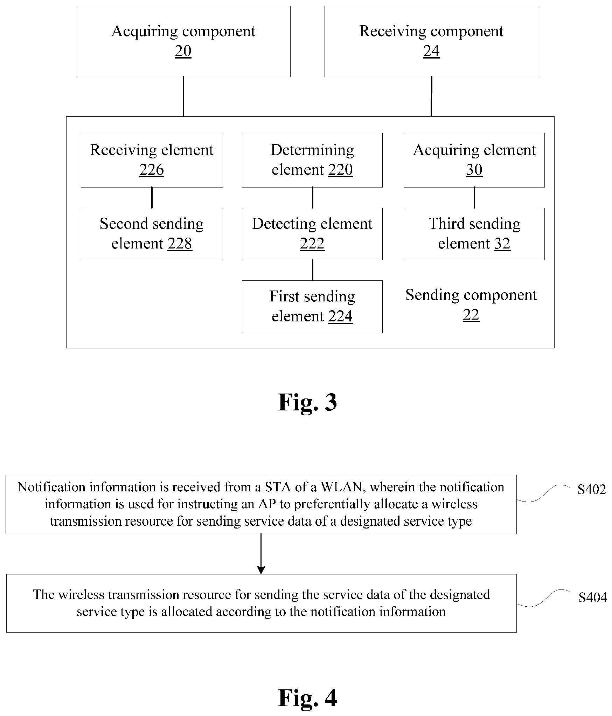

In the embodiment, as shown in Fig. 3, the sending component 22 may further include, but is not limited to the following processing elements: a determining element 220, coupled with a detecting element 222 and configured to determine a transmission channel for sending the service data of the designated service type; the detecting element 222, coupled with a first sending element 224 and configured to detect a channel state of the transmission channel; the first sending element 224, configured to send the notification information to the AP when the detecting element 222 detects that the channel state is idle. Specifically, the first sending element 224 is configured to send the notification information to the AP when it is detected that the channel state is idle in a designated period of time and/or a random period of time.

In the embodiment, as shown in Fig. 3, the sending component 22 may further include, but is not limited to the following processing elements: a receiving element 226, coupled with a second sending element 228 and configured to receive a wireless frame sent by the AP; the second sending element 228, configured to send the notification information to the AP after a first interframe spacing has elapsed from the reception of the wireless frame.

In the embodiment, as shown in Fig. 3, the sending component 22 may further include, but is not limited to the following processing elements: an acquiring element 30, coupled with a third sending element 32 and configured to acquire a designated time slot of the AP; the third sending element 32, configured to send the notification information to the AP within the designated time slot.

In the embodiment, as shown in Fig. 3, the device may further include the following processing components: a receiving component 24, configured to receive a response message from the AP, wherein the response message is used for instructing the STA to send the service data of the designated service type according to a preset condition.

It needs to be noted that the terms "first", "second" and so on in the embodiment are only used for facilitating description. That is, they are only used for distinguishing similar description information in the context, but not used for limiting an order of execution.

### Embodiment 2

Corresponding to the first embodiment, the embodiment provides description at an AP side of a WLAN.

Fig. 4 is a flowchart of a service data transmission method according to the second embodiment of the present disclosure. The method is applied to an AP of a WLAN. As shown in Fig. 4, the method includes the following steps.

Step 402: notification information is received from a STA of the WLAN, wherein the notification information is used for instructing the AP to preferentially allocate a wireless transmission resource for sending service data of a designated service type.

Step 404: the wireless transmission resource for sending the service data of the designated service type is allocated according to the notification information.

By means of the foregoing steps, since the notification information is received at the AP side, the AP is able to learn that the STA needs to send service data of the designated service type, and thus preferentially allocate the transmission resource for sending the service data of the designated service type, thereby reducing a transmission delay of the service data of the designated service type.

In the embodiment, a response message of the notification information may be sent to the STA after the notification information from the STA is received, wherein the response message is used for instructing the STA to send the service data of the designated service type according to a preset condition.

In the embodiment, the preset condition includes at least one of the followings: the service data of the designated service type is send after a second preset interframe spacing has elapsed from the reception of the response message; the service data of the designated service type is sent after a preset period of time; the service data of the designated service type is sent after a designated wireless frame from the AP is received. It needs to be noted that the three preset conditions may be combined with each other, which may specifically refer to the description in the first embodiment and will not be repeated here.

When the service data of the designated service type is sent after the preset period of time, a designated wireless frame is sent to the STA, wherein the designated wireless frame is used for instructing the STA to send the service data of the designated type after a designated period of time has elapsed from the reception of wireless frame. Specifically, the above technical solution may specifically be embodied as, but it not limited to the following processing procedure: the AP instructs, in the response frame B, that the STA needs to wait for a period of time, and sends a wireless frame C to the STA after the instructed period of time. Further, after the instructed period of time has elapsed from the reception of the response frame B, and after receiving the wireless frame C sent by the AP, the STA sends burst data of an emergency service during a frame switching process with the AP, wherein the waiting time may be set according to a current load state and a priority of data burst of the emergency service, wherein the priority is indicated by the STA.

In the embodiment, the notification information carries priority information for indicating a priority of the service data of the designated service type among different designated service types, wherein the priority information is used for indicating a priority for allocating the wireless transmission resource for the service data among service data of different priorities.

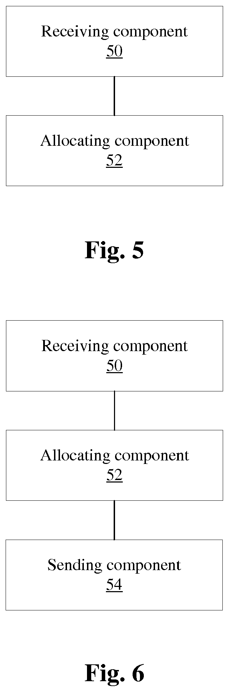

The embodiment further provides a service data transmission device. The device is applied to an AP of a WLAN. As shown in Fig. 5, the device includes:
a receiving component 50, coupled with an allocating component 52 and configured to receive notification information from a STA of the WLAN, wherein the notification information is used for instructing the AP to preferentially allocate a wireless transmission resource for sending the service data of the designated service type;
the allocating component 52, configured to allocate, according to the notification information, the wireless transmission resource for sending the service data of the designated service type.

In the embodiment, as shown in Fig. 6, the device may also include: a sending component 54, configured to send a response message of the notification information to the STA, wherein the response message is used for instructing the STA to send the service data of the designated service type according to a preset condition.

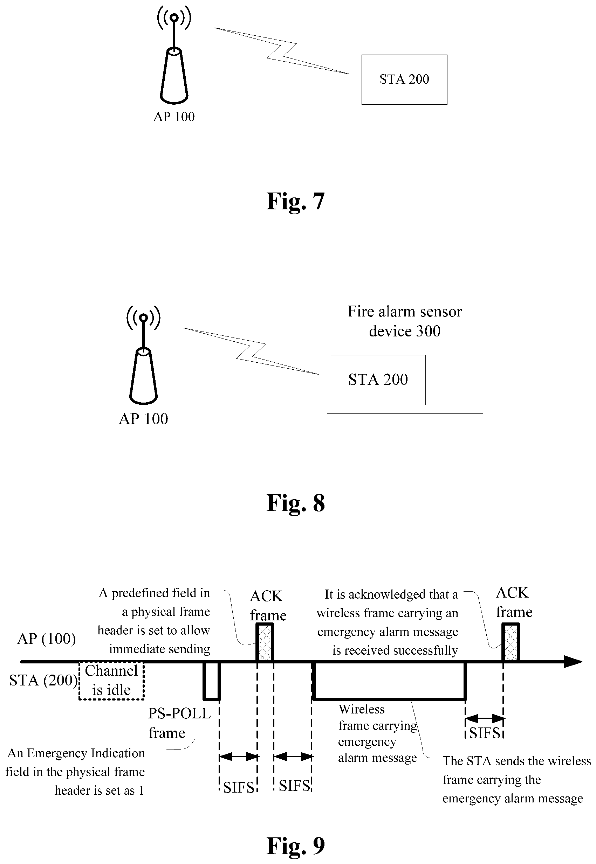

Detailed description will be provided below in combination with Embodiments 3-6 and related accompanying drawings in order to facilitate the understanding of the embodiments. The embodiments are implemented based on a WLAN as shown in Fig. 7. As shown in Fig. 7, the WLAN system includes an AP 100 and a STA 200.

It needs to be noted that the terms "first", "second" and so on in the embodiment are only used for facilitating description. That is, they are only used for distinguishing similar description information in the context, but not used for limiting an order of execution.

### Embodiment 3

In the embodiment, the STA 200 is a WLAN component of a fire alarm sensor device 300. When detecting an abnormal temperature rise, the fire alarm sensor device 300 automatically generates alarm data containing temperature abnormality indication. The alarm data is sent to the AP 100 by the STA 200 to be further sent to a network server. A specific WLAN structure in the embodiment may refer to Fig. 8.

As shown in Fig. 9, after receiving the alarm data from an upper layer, the STA 200 generates emergency service data, starts to detect a channel, and contends for an opportunity of sending over a channel through a CSMA/CA mechanism. When it is detected that the channel is idle and transmission can be performed according to the CSMA/CA mechanism, the STA 200 sends a short PS-Poll wireless frame to the AP 100, and sets an Emergency Indication field in a physical frame header of the short PS-Poll wireless frame as 1, which indicates that there is burst data of an emergency service to be sent in the STA 200.

After receiving the short PS-Poll wireless frame, the AP 100 determines, according to the value of the Emergency Indication field of the short PS-Poll wireless frame and a current load level of the AP 100, to notify the STA 200 to send the burst data of the emergency service immediately, and replies, after a Short InterFrame Spacing (SIFS), a short ACKnowledgement (ACK) frame to the STA 200, wherein a predefined field in a physical frame header of the short ACK frame is set to notify the STA 200 to send the burst data of the emergency service immediately.

The STA 200 receives the short ACK frame sent by the AP 100, detects that the predefined field in the physical frame header of the short ACK frame is set to indicate that it is allowed to send the data immediately, and then immediately sends to the AP 100 after an SIFS, a wireless frame containing the burst data of the emergency service.

After receiving the wireless frame containing the burst data of the emergency service, the AP 100 sends an ACK frame after an SIFS to acknowledge that the wireless frame containing the burst data of the emergency service has been received correctly.

### Embodiment 4

As shown in Fig. 8, the STA 200 is a WLAN component of a fire alarm sensor device 300. When detecting an abnormal temperature rise, the fire alarm sensor device 300 automatically generates alarm data containing temperature abnormality indication. The alarm data is sent to the AP 100 by the STA 200 to be further sent to a network server. The STA 200 is in a mode of saving power when working normally.

In the embodiment, priorities of burst data of emergency services are divided into 4 levels, wherein the priorities are level 1, level 2, level 3 and level 4 from high to low.

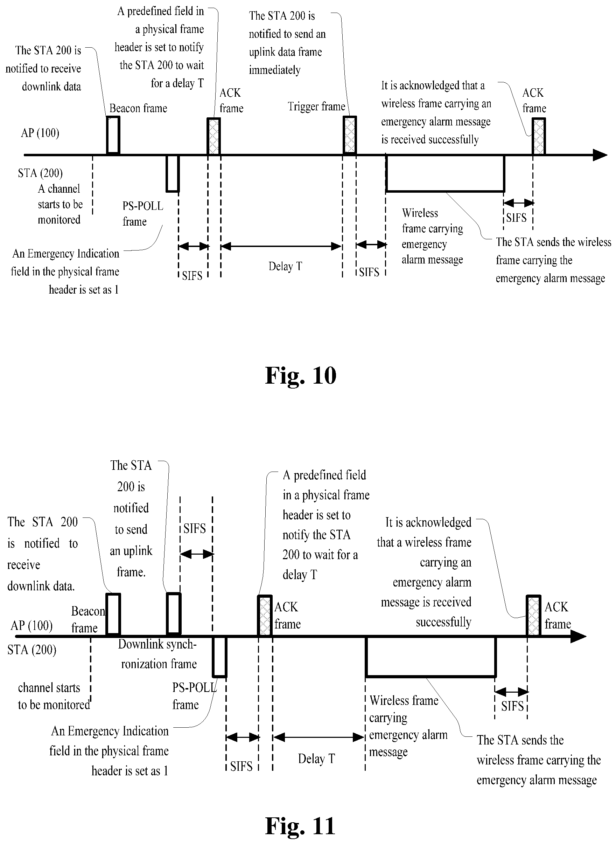

As shown in Fig. 10, after receiving the alarm data from an upper layer, the STA 200 generates emergency service data while happening to enter a wakeup monitoring window of the mode of saving power. The STA 200 monitors a beacon frame broadcast by the AP 100, and finds downlink data notification of the STA 200 in the beacon frame. The STA 200 sends a short PS-Poll wireless frame to the AP 100 to notify the AP 100 that the STA 200 has awakened and is able to receive downlink data. In the meanwhile, the STA 200 sets an Emergency Indication field in a physical frame header of the PS-Poll frame as 2, which indicates that there is burst data of an emergency service having a corresponding emergency priority of 2 to be sent in the STA 200.

After receiving the PS-Poll wireless frame, the AP 100 determines, according to the value of the Emergency Indication field of the PS-Poll wireless frame and a current load level of the AP 100, to notify the STA 200 to transmit the burst data of the emergency service after a delay T, and replies, after an SIFS, an ACK frame to the STA 200, wherein a predefined field in a physical frame header of the ACK frame is set to notify the STA 200 to wait for the delay T.

The STA 200 receives the ACK frame sent by the AP 100, detects that the predefined field in the physical frame header of the short ACK frame is set as the delay T, then the STA 200 waits for the delay T.

After the delay T, the AP 100 contends for a channel according to a CSMA/CA mechanism, and after detecting that the channel is idle, sends a Trigger wireless frame to the STA 200.

The STA 200 receives the Trigger wireless frame, and sends a wireless frame containing the burst data of the emergency service after an SIFS.

The AP 100 receives the wireless frame containing the burst data of the emergency service and sends an ACK frame after an SIFS to acknowledge that the wireless frame containing the burst data of the emergency service has been received correctly.

### Embodiment 5

As shown in Fig. 8, the STA 200 is a WLAN component of a fire alarm sensor device 300. When detecting an abnormal temperature rise, the fire alarm sensor device 300 automatically generates alarm data containing temperature abnormality indication. The alarm data is sent to the AP 100 by the STA 200 to be further sent to a network server. The STA 200 is in a mode of saving power when working normally.

In the embodiment, priorities of burst data of emergency services are divided into 4 levels, wherein level 1 represents the highest priority, level 4 represents the lowest priority, and level 2 and level 3 represent different priorities from high to low.

As shown in Fig. 11, after receiving the alarm data from an upper layer, the STA 200 generates emergency service data while happening to enter a wakeup monitoring window of the mode of saving power. The STA 200 monitors a beacon frame broadcast by the AP 100, and finds downlink data notification of the STA 200 in the beacon frame. The AP 100 sends a downlink synchronization frame to the STA 200. After receiving the downlink synchronization frame, the STA 200 sends, after waiting for an SIFS, a PS-Poll frame to the AP 100 to notify the AP 100 that the STA 200 is already able to receive downlink data. In the meanwhile, the STA 200 sets an Emergency Indication field in a physical frame header of the PS-Poll frame as 1, which indicates that there is burst data of an emergency service having a corresponding priority of 1 to be sent in the STA 200.

After receiving the PS-Poll wireless frame, the AP 100 determines, according to the value of the Emergency Indication field of the PS-Poll wireless frame and a current load level of the AP 100, to notify the STA 200 to transmit the burst data of the emergency service after a delay T, and replies, after an SIFS, an ACK frame to the STA 200, wherein a predefined field in a physical frame header of the ACK frame is set to notify the STA 200 wait for the delay T.

The STA 200 receives the ACK frame sent by the AP 100, detects that the predefined field in the physical frame header of the short ACK frame is set as the delay T, then the STA 200 waits for the delay T.

After the delay T, the STA 200 contends for a channel according to a CSMA/CA mechanism, and after detecting that the channel is idle, sends to the AP 100 a wireless frame containing the burst data of the emergency service.

The AP 100 receives the wireless frame containing the burst data of the emergency service, and sends an ACK frame after an SIFS to acknowledge that the wireless frame containing the burst data of the emergency service has been received correctly.

### Embodiment 6

As shown in Fig. 8, the STA 200 is a WLAN component of a fire alarm sensor device 300. When detecting an abnormal temperature rise, the fire alarm sensor device 300 automatically generates alarm data containing temperature abnormality indication. The alarm data is sent to the AP 100 by the STA 200 to be further sent to a network server. The STA 200 is in a mode of saving power for a longer period of time when working normally.

In the embodiment, priorities of burst data of emergency services are divided into 2 types, respectively representing burst data of an emergency service and not burst data of an emergency service.

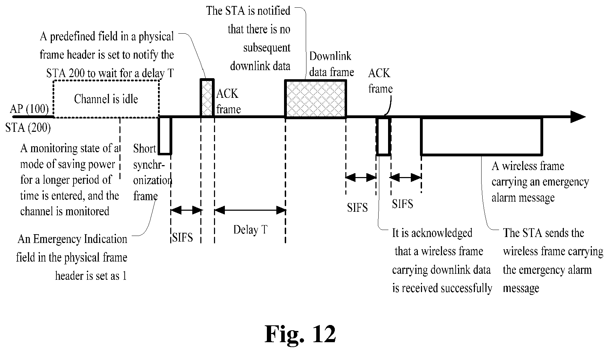

As shown in Fig. 12, after receiving the alarm data from an upper layer, the STA 200 generates emergency service data while entering a monitoring state of the mode of saving power for a longer period of time. The STA 200 monitors a channel, and when detecting that the channel is idle and allows transmitting data, sends a short synchronization frame to the AP 100 to notify the AP 100 that the STA has awakened. In the meanwhile, the STA 200 sets an Emergency Indication field in a physical frame header of the short synchronization frame as 1, which indicates that there is burst data of an emergency service to be sent in the STA 200.

After receiving the short synchronization frame, the AP 100 determines, according to the value of the Emergency Indication field of the short synchronization frame and a current load level of the AP 100, to notify the STA 200 to wait for a delay T, and waits for the AP 100 to transmit downlink data first, and then sends the burst data of the emergency service. After an SIFS, the AP 100 replies an ACK frame to the STA 200, and sets a predefined field in a physical frame header of the ACK frame to notify the STA 200 to wait for the delay T.

The STA 200 receives the ACK frame sent by the AP 100, detects that the predefined field in the physical frame header of the short ACK frame is set as the delay T, then the STA 200 waits for the delay T.

After the delay T, the AP 100 contends for a channel according to a CSMA/CA mechanism, and after detecting that the channel is idle, sends a downlink wireless frame containing the data to the STA 200.

The STA 200 receives the downlink wireless frame containing the data, detects that the wireless frame indicates that there is no subsequent downlink data to be sent, and then sends an ACK frame after an SIFS.

The STA 200 sends the wireless frame containing the burst data of the emergency service after an SIFS.

It may be learned from the embodiments that the embodiments of the present disclosure implements the following beneficial effect.

Before sending burst data of an emergency service, a STA notifies an AP to control transmission of uplink data according to priorities, thereby shortening a delay in transmitting the burst data of the emergency service having a high priority, reducing the probability of collision, and improving the success rate of transmission of the burst data of the emergency service.

In another embodiment, a kind of software is further provided for implementing the technical solutions described in above embodiments and preferable embodiments.

In another embodiment, a storage medium is further provided, which stores the above software and includes, but is not limited to an optical disc, a floppy disk, hardware, an erasable memory, and so on.

Obviously, those skilled in the art should understand that the components or steps of the present disclosure may be implemented by general computing devices and centralized in a single computing device or distributed on a network consisting of multiple computing devices. Optionally, the components or steps may be implemented by program codes executable by the computing devices, so that they may be stored in a storage device and executed by the computing devices, and in some cases, the steps as illustrated or described may be implemented according to sequences different from those described herein, or they may be implemented by respectively fabricating them into integrated circuit components or by fabricating multiple components or steps in the components or steps into a single integrated circuit component. By doing so, the present disclosure is not limited to any specific combination of hardware and software.

The above are only example embodiments of the present disclosure and should not be used for limiting the present disclosure. For those skilled in the art, the present disclosure may have various modifications and changes. Any modifications, improvements and the like made within the principle of the present disclosure shall fall within the scope of protection defined by the claims of the present disclosure.

### Industrial Applicability

The technical solutions provided by the embodiments of the present disclosure may be applied to a transmission processing procedure of service data. A technical means of sending to an AP notification information for instructing the AP to preferentially allocate a wireless transmission resource for sending service data of a designated service type before sending the service data of the designated service type is applied, thereby solving technical problems including a delay in sending emergency burst data due to the fact that an AP fails to identify the priority of the burst data during the sending of the emergency service data in the related art, to further reduce the transmission delay of the emergency service data while improving the success rate of burst transmission of the emergency service data.

## Claims

1. A service data transmission processing method, applied to a Station, STA, of a Wireless Local Area Network, WLAN, and comprising:
receiving alarm data from an upper layer and generating service data required to be sent by the STA, wherein the service data is of a designated service type, and the service data of the designated service type is emergency service data (S102);
sending notification information to an Access Point, AP, of the WLAN (S104), wherein the notification information is used for instructing that the AP allocates a wireless transmission resource for sending the service data of the designated service type; and
receiving a response message from the AP, **characterised in that** the response message is used for instructing the STA to send the service data of the designated service type according to a preset condition, wherein the preset condition comprises at least one of the followings:
sending the service data of the designated service type after a second preset interframe spacing has elapsed from the reception of the response message;
sending the service data of the designated service type after a preset period of time;
sending the service data of the designated service type after receiving a designated wireless frame from the AP.

2. The method according to claim 1, wherein sending the notification information to the AP (S104) comprises:
determining a transmission channel for sending the service data of the designated service type;
detecting a channel state of the transmission channel;
sending the notification information to the AP when it is detected that the channel state is idle, preferably, sending the notification information to the AP when it is detected that the channel state is idle comprises: sending the notification information to the AP when it is detected that the channel state is idle in a designated period of time and/or a random period of time.

3. The method according to claim 1, wherein sending the notification information to the AP (S104) comprises:
receiving a wireless frame sent by the AP;
sending the notification information to the AP after a first interframe spacing has elapsed from the reception of the wireless frame.

4. The method according to claim 1, wherein sending the notification information to the AP (S104) comprises:
acquiring a designated time slot of the AP;
sending the notification information to the AP after the designated time slot.

5. The method according to claim 1, wherein the notification information carries priority information for indicating a priority of the service data of the designated service type among different designated service types, wherein the priority information is used for indicating a priority for allocating the wireless transmission resource for the service data among service data of different priorities.

6. The method according to any one of claims 1 to 5, wherein the notification information is sent by the following manner:
sending the notification information at one or more preset information bits or one or more preset signaling bits of a designated wireless frame;
the designated wireless frame comprises: a short wireless frame, wherein the short wireless frame only comprises a frame header of a physical layer or an End of frame of a physical layer, and preferably, the one or more preset information bits or one or more preset signaling bits are set at the frame header of the physical layer.

7. A service data transmission method, applied to an Access Point, AP, of a Wireless Local Area Network, WLAN, and comprising:
receiving notification information from a Station, STA, of the WLAN (S402), wherein the notification information is used for instructing the AP to allocate a wireless transmission resource for sending service data of a designated service type, and the service data of the designated service type is emergency service data;
allocating, according to the notification information, the wireless transmission resource for sending the service data of the designated service type (S404); and
sending a response message of the notification information to the STA, **characterised in that** the response message is used for instructing the STA to send the service data of the designated service type according to a preset condition, wherein the preset condition comprises at least one of the followings:
sending the service data of the designated service type after a second preset interframe spacing has elapsed from the reception of the response message;
sending the service data of the designated service type after a preset period of time;
sending the service data of the designated service type after receiving a designated wireless frame from the AP.

8. The method according to claim 7, wherein when the service data of the designated service type is sent after the preset period of time, the method further comprises:
sending a designated wireless frame to the STA, wherein the designated wireless frame is used for instructing the STA to send the service data of the designated type after a designated period of time has elapsed from the reception of wireless frame.

9. The method according to claim 7, wherein the notification information carries priority information for indicating a priority of the service data of the designated service type among different designated service types, wherein the priority information is used for indicating a priority for allocating the wireless transmission resource for the service data among service data of different priorities.

10. A service data transmission processing device, applied to a Station, STA, of a Wireless Local Area Network, WLAN, and comprising:
an acquiring component (20), configured to receive alarm data from an upper layer and generate service data required to be sent by the STA, wherein the service data is of a designated service type, and the service data of the designated service type is emergency service data;
a sending component (22), configured to send notification information to an Access Point, AP, of the WLAN, wherein the notification information is used for instructing that the AP allocates a wireless transmission resource for sending the service data of the designated service type; and
a receiving component (24), configured to receive a response message from the AP, **characterised in that** the response message is used for instructing the STA to send the service data of the designated service type according to a preset condition, wherein the preset condition comprises at least one of the followings:
sending the service data of the designated service type after a second preset interframe spacing has elapsed from the reception of the response message;
sending the service data of the designated service type after a preset period of time;
sending the service data of the designated service type after receiving a designated wireless frame from the AP.

11. The device according to claim 10, wherein the sending component (22) comprises:
a determining element (220), configured to determine a transmission channel for sending the service data of the designated service type;
a detecting element (222), configured to detect a channel state of the transmission channel;
a first sending element (224), configured to send the notification information to the AP when the detecting element detects that the channel state is idle, the first sending element (224) is configured to send the notification information to the AP when it is detected that the channel state is idle in a designated period of time and/or a random period of time.

12. The device according to claim 10, wherein the sending component (22) comprises:
a receiving element (226), configured to receive a wireless frame sent by the AP;
a second sending element (228), configured to send the notification information to the AP after a first interframe spacing has elapsed from the reception of the wireless frame.

13. The device according to claim 10, wherein the sending component (22) comprises:
an acquiring element (30), configured to acquire a designated time slot of the AP;
a third sending element (32), configured to send the notification information to the AP after the designated time slot.

14. A service data transmission device, applied to an Access Point, AP, of a Wireless Local Area Network, WLAN, and comprising:
a receiving component (50), configured to receive notification information from a Station, STA, of the WLAN, wherein the notification information is used for instructing the AP to allocate a wireless transmission resource for sending service data of a designated service type, and the service data of the designated service type is emergency service data;
an allocating component (52), configured to allocate, according to the notification information, the wireless transmission resource for sending the service data of the designated service type; and
a sending component (54), configured to send a response message of the notification information to the STA, **characterised in that** the response message is used for instructing the STA to send the service data of the designated service type according to a preset condition, wherein the preset condition comprises at least one of the followings:
sending the service data of the designated service type after a second preset interframe spacing has elapsed from the reception of the response message;
sending the service data of the designated service type after a preset period of time;
sending the service data of the designated service type after receiving a designated wireless frame from the AP.

## Patentansprüche

1. Verarbeitungsverfahren für die Übertragung von Servicedaten, angewendet auf eine Station, STA, eines Wireless Local Area Network (WLAN), umfassend,
Empfangen eines Alarms von einer oberen Schicht und Generieren von Servicedaten, die von der STA gesendet werden müssen, wobei die Servicedaten einen bestimmten Servicetyp haben und es sich bei den Servicedaten des bestimmten Servicetyps um Notfallservicedaten (S102) handelt;
Senden von Benachrichtigungsinformationen an einen Zugriffspunkt, AP, des WLAN (S104), wobei die Benachrichtigungsinformationen der Anweisung dienen, dass der AP eine Wireless-Übertragungsressource zum Senden der Servicedaten des bestimmten Servicetyps zuordnet; und
Empfangen einer Antwortnachricht von dem AP, **dadurch gekennzeichnet, dass** die Antwortnachricht der Anweisung der STA dient, die Servicedaten des bestimmten Servicetyps gemäß einer voreingestellten Bedingung zu senden,
wobei die voreingestellte Bedingung mindestens eines von Folgendem umfasst:
Senden der Servicedaten des bestimmten Servicetyps, nachdem ein zweiter voreingestellter Interframe-Space ab dem Empfang der Antwortnachricht abgelaufen ist;
Senden der Servicedaten des bestimmten Servicetyps nach einem voreingestellten Zeitraum;
Senden der Servicedaten des bestimmten Servicetyps nach dem Empfang eines bestimmten Wireless-Frame von dem AP.

2. Verfahren nach Anspruch 1, wobei das Senden der Benachrichtigungsinformationen an den AP (S104) Folgendes umfasst:
Bestimmen eines Übertragungskanals zum Senden der Servicedaten des bestimmten Servicetyps;
Erkennen eines Kanalzustands des Übertragungskanals;
Senden der Benachrichtigungsinformationen an den AP, wenn erkannt wird,
dass sich der Kanalzustand im Leerlauf befindet, wobei das Senden der Benachrichtigungsinformationen an den AP, wenn erkannt wird, dass sich der Kanalzustand im Leerlauf befindet, vorzugsweise Folgendes umfasst: Senden der Benachrichtigungsinformationen an den AP, wenn erkannt wird, dass sich der Kanalzustand während eines bestimmten Zeitraums und/oder eines zufälligen Zeitraums im Leerlauf befindet.

3. Verfahren nach Anspruch 1, wobei das Senden der Benachrichtigungsinformationen an den AP (S104) Folgendes umfasst:
Empfangen eines von dem AP gesendeten Wireless-Frame;
Senden der Benachrichtigungsinformationen an den AP, nachdem ein erster Interframe-Space ab dem Empfang des Wireless-Frame abgelaufen ist.

4. Verfahren nach Anspruch 1, wobei das Senden der Benachrichtigungsinformationen an den AP (S104) Folgendes umfasst:
Erfassen eines bestimmten Zeitfensters von dem AP;
Senden der Benachrichtigungsinformationen nach dem bestimmten Zeitfenster an den AP.

5. Verfahren nach Anspruch 1, wobei die Benachrichtigungsinformationen Prioritätsangaben für die Anzeige einer Priorität der Servicedaten des bestimmten Servicetyps unter verschiedenen bestimmten Servicetypen enthalten, wobei die Prioritätsangaben für die Anzeige einer Priorität zum Zuordnen der Wireless-Übertragungsressource für die Servicedaten unter Servicedaten mit unterschiedlichen Prioritäten verwendet werden.

6. Verfahren nach einem der Ansprüche 1 bis 5, wobei die Benachrichtigungsinformationen auf folgende Weise gesendet werden:
Senden der Benachrichtigungsinformationen mit einem oder mehreren voreingestellten Informationsbits oder einem oder mehreren voreingestellten Signalisierungsbits eines bestimmten Wireless-Frame;
wobei der bestimmte Wireless-Frame Folgendes umfasst: einen kurzen Wireless-Frame, wobei der kurze Wireless-Frame nur einen Frame-Kopf einer physikalischen Schicht oder ein Ende eines Frames einer physikalischen Schicht umfasst und vorzugweise die einen oder mehreren voreingestellten Informationsbits oder die einen oder mehreren voreingestellten Signalisierungsbits im Frame-Kopf der physikalischen Schicht eingestellt sind.

7. Verfahren für die Übertragung von Servicedaten, angewendet auf einen Zugriffspunkt, AP, eines Wireless Local Area Network (WLAN), umfassend:
Empfangen von Benachrichtigungsinformationen von einer Station, STA, des WLAN (S402), wobei die Benachrichtigungsinformationen für die Anweisung des AP verwendet werden, eine Wireless-Übertragungsressource für das Senden von Servicedaten eines bestimmten Servicetyps zuzuordnen, und die Servicedaten des bestimmten Servicetyps Notfallservicedaten sind;
Zuordnen, gemäß den Benachrichtigungsinformationen, der Wireless-Übertragungsressource zum Senden der Servicedaten des bestimmten Servicetyps (S404); und
Senden einer Antwortnachricht der Benachrichtigungsinformationen an die STA, **dadurch gekennzeichnet, dass**
die Antwortnachricht für die Anweisung der STA verwendet wird, die Servicedaten des bestimmten Servicetyps gemäß einer voreingestellten Bedingung zu senden, wobei die voreingestellte Bedingung mindestens eines von Folgendem umfasst:
Senden der Servicedaten des bestimmten Servicetyps, nachdem ein zweiter voreingestellter Interframe-Space ab dem Empfang der Antwortnachricht abgelaufen ist;
Senden der Servicedaten des bestimmten Servicetyps nach einem voreingestellten Zeitraum;
Senden der Servicedaten des bestimmten Servicetyps nach dem Empfang eines bestimmten Wireless-Frame von dem AP.

8. Verfahren nach Anspruch 7, wobei, wenn die Servicedaten des bestimmten Servicetyps nach einem voreingestellten Zeitraum gesendet werden, das Verfahren ferner Folgendes umfasst:
Senden eines bestimmten Wireless-Frame an die STA, wobei der bestimmte Wireless-Frame dazu dient, die STA anzuweisen, die Servicedaten des bestimmten Typs nach Ablauf eines bestimmten Zeitraums ab dem Empfang des Wireless-Frame zu senden.

9. Verfahren nach Anspruch 7, wobei die Benachrichtigungsinformationen Prioritätsangaben enthalten, die eine Priorität der Servicedaten des bestimmten Servicetyps unter verschiedenen bestimmten Servicetypen anzeigen, wobei die Prioritätsangaben verwendet werden, um eine Priorität für die Zuordnung der Wireless-Übertragungsressource der Servicedaten unter Servicedaten mit unterschiedlichen Prioritäten anzugeben.

10. Verarbeitungsvorrichtung für die Übertragung von Servicedaten, angewendet auf eine Station, STA, eines Wireless Local Area Network (WLAN), umfassend:
eine Erfassungskomponente (20), konfiguriert, um Alarmdaten von einer oberen Schicht zu empfangen und Servicedaten zu generieren, die von der STA gesendet werden müssen, wobei die Servicedaten einen bestimmten Servicetyp haben und es sich bei den Servicedaten des bestimmten Servicetyps um Notfallservicedaten handelt;
eine Sendekomponente (22), konfiguriert, um Benachrichtigungsinformationen an einen Zugriffspunkt, AP, des WLAN zu senden, wobei die Benachrichtigungsinformationen für die Anweisung verwendet werden, dass der AP eine Wireless-Übertragungsressource zuordnet, um Servicedaten des bestimmten Servicetyps zu senden; und
eine Empfangskomponente (24), konfiguriert, um eine Antwortnachricht von dem AP zu empfangen, **gekennzeichnet dadurch, dass**
die Antwortnachricht für die Anweisung der STA verwendet wird, die Servicedaten des bestimmten Servicetyps gemäß einer voreingestellten Bedingung zu senden, wobei die voreingestellte Bedingung mindestens eines von Folgendem umfasst:
Senden der Servicedaten des bestimmten Servicetyps, nachdem ein zweiter voreingestellter Interframe-Space ab dem Empfang der Antwortnachricht abgelaufen ist;
Senden der Servicedaten des bestimmten Servicetyps nach einem voreingestellten Zeitraum;
Senden der Servicedaten des bestimmten Servicetyps nach dem Empfang eines bestimmten Wireless-Frame von dem AP.

11. Vorrichtung nach Anspruch 10, wobei die Sendekomponente (22) Folgendes umfasst:
ein Bestimmungselement (220), konfiguriert, um einen Übertragungskanal zum Senden der Servicedaten des bestimmten Servicetyps festzulegen;
ein Erkennungselement (222), konfiguriert, um einen Kanalzustand des Übertragungskanals zu erkennen;
ein erstes Sendeelement (224), konfiguriert, um die Benachrichtigungsinformationen an den AP zu senden, wenn das Erkennungselement feststellt, dass sich der Kanalzustand im Leerlauf befindet, wobei das erste Sendeelement (224) konfiguriert ist, um die Benachrichtigungsinformationen an den AP zu senden, wenn erkannt wird,
dass sich der Kanalzustand während eines bestimmten Zeitraums und/oder eines zufälligen Zeitraums im Leerlauf befindet.

12. Vorrichtung nach Anspruch 10, wobei die Sendekomponente (22) Folgendes umfasst:
ein Empfangselement (226), konfiguriert, um einen von dem AP gesendeten Wireless-Frame zu empfangen;
ein zweites Sendeelement (228), konfiguriert, um Benachrichtigungsinformationen an den AP zu senden, nachdem ein erster Interframe-Space ab dem Empfang des Wireless-Frame abgelaufen ist.

13. Vorrichtung nach Anspruch 10, wobei die Sendekomponente (22) Folgendes umfasst:
ein Erfassungselement (30), konfiguriert, um ein bestimmtes Zeitfenster von dem AP zu erfassen;
ein drittes Sendeelement (32), konfiguriert, um nach einem bestimmten Zeitfenster Benachrichtigungsinformationen an den AP zu senden.

14. Übertragungsvorrichtung für Servicedaten, angewendet auf einen Zugriffspunkt, AP, eines Wireless Local Area Network (WLAN), umfassend:
eine Empfangskomponente (50), konfiguriert, um Benachrichtigungsinformationen von einer Station, STA, des WLAN zu empfangen, wobei die Benachrichtigungsinformationen für die Anweisung des AP verwendet werden, eine Wireless-Übertragungsressource für das Senden von Servicedaten eines bestimmten Servicetyps zuzuordnen, und die Servicedaten des bestimmten Servicetyps Notfallservicedaten sind;
eine Zuordnungskomponente (52), konfiguriert, um gemäß den Benachrichtigungsinformationen die Wireless-Übertragungsressource zum Senden der Servicedaten des bestimmten Servicetyps zuzuordnen; und
eine Sendekomponente (54), konfiguriert, um eine Antwortnachricht der Benachrichtigungsinformationen an die STA zu senden, **gekennzeichnet dadurch, dass** die Antwortnachricht für die Anweisung der STA verwendet wird, die Servicedaten des bestimmten Servicetyps gemäß einer voreingestellten Bedingung zu senden, wobei die voreingestellte Bedingung mindestens eines von Folgendem umfasst:
Senden der Servicedaten des bestimmten Servicetyps, nachdem ein zweiter voreingestellter Interframe-Space ab dem Empfang der Antwortnachricht abgelaufen ist;
Senden der Servicedaten des bestimmten Servicetyps nach einem voreingestellten Zeitraum;
Senden der Servicedaten des bestimmten Servicetyps nach dem Empfang eines bestimmten Wireless-Frame von dem AP.

## Revendications

1. Une méthode de traitement de transmission de données de service, appliquée à une Station, STA, d'un réseau local sans fil, WLAN, comprenant :
la réception de données d'alarme provenant d'une couche supérieure et la génération de données de service devant être envoyées par la STA, où les données de service sont d'un type de service désigné, et les données de services du type de service désigné sont des données de service d'urgence (S102) ;
l'envoi d'informations de notification vers un Point d'Accès, PA, du WLAN (S104), où les informations de notification sont utilisées pour ordonner au PA d'attribuer une ressource de transmission sans fil pour l'envoi de données de service du type de service désigné ; et
la réception d'un message de réponse du PA, **caractérisée en ce que** le message de réponse
est utilisé pour ordonner à la STA d'envoyer les données de service du type de service désigné selon une condition prédéfinie, où la condition prédéfinie inclut au moins un des points suivants :
l'envoi de données de service du type de service désigné après l'écoulement d'un second espace intertrame prédéfini à partir de la réception du message de réponse ;
l'envoi de données de service du type de service désigné après une période prédéfinie ;
l'envoi de données de service du type de service désigné après réception d'une trame sans fil désignée provenant du PA

2. Une méthode selon la revendication 1, où l'envoi d'informations de notification vers le PA (S104) comprend :
la détermination d'un canal de transmission pour l'envoi de données de service du type de service désigné ;
la détection de l'état du canal de transmission ;
l'envoi d'informations de notification vers le PA lorsque l'état du canal est détecté comme étant inactif. Préférablement, l'envoi d'informations de notification vers le PA lorsque l'état du canal est détecté comme étant inactif comprend : l'envoi d'informations de notification vers le PA lorsque l'état du canal est détecté comme étant inactif pendant une période de temps désignée et/ou une période de temps aléatoire.

3. Une méthode selon la revendication 1, où l'envoi d'informations de notification vers le PA (S104) comprend :
la réception d'une trame sans fil envoyée par le PA ;
l'envoi d'informations de notification vers le PA après l'écoulement d'un premier espace intertrame à partir de la réception de la trame sans fil.

4. Une méthode selon la revendication 1, où l'envoi d'informations de notification vers le PA (S104) comprend :
l'acquisition d'un créneau temporel désigné du PA ;
l'envoi d'informations de notification vers le PA suivant le créneau temporel défini.

5. Une méthode selon la revendication 1, où les informations de notification transportent des informations de priorité permettant d'indiquer la priorité des données de service du type de service désigné parmi différents types de services désignés, où les informations de priorité sont utilisées pour indiquer la priorité d'attribution de la ressource de transmission sans fil pour les données de service parmi des données de service de priorités différentes.

6. Une méthode selon l'une ou plusieurs des revendications 1 à 5, où les informations de notification sont envoyées de la manière suivante :
envoi des informations de notification vers un ou plusieurs bits d'informations prédéfinis, ou vers un ou plusieurs bits de signalisation prédéfinis d'une trame sans fil désignée ;
la trame sans fil désignée comprend : une trame sans fil courte, où la trame sans fil courte comprend uniquement un en-tête de trame d'une couche physique, ou une fin de trame d'une couche physique, et préférablement, le ou les bits d'informations prédéfinis, ou un ou plusieurs bits de signalisation prédéfinis sont définis à l'en-tête de trame de la couche physique.

7. Une méthode de transmission de données de service, appliquée à un Point d'Accès, AP, d'un réseau local sans fil, WLAN, et comprenant :
la réception d'informations de notification d'une Station, STA, du WLAN (S402), où les informations de notification sont utilisées pour ordonner au PA d'attribuer une ressource de transmission sans fil pour l'envoi de données de service d'un type de service désigné ; et où les données de service du type de service désigné sont des données de service d'urgence ;
l'attribution, selon les informations de notification, d'une ressource de transmission sans fil pour l'envoi de données de service du type de service désigné (S404) ; et
l'envoi d'un message de réponse des informations de notification vers la STA,
**caractérisé en ce que**
le message de réponse est utilisé pour ordonner à la STA d'envoyer des données de service du type de service désigné selon une condition prédéfinie,
où la condition prédéfinie inclut au moins un des points suivants :
l'envoi de données de service du type de service désigné après l'écoulement d'un second espace intertrame prédéfini à partir de la réception du message de réponse ;
l'envoi de données de service du type de service désigné après une période de temps prédéfinie ;
l'envoi de données de service du type de service désigné après réception d'une trame sans fil désignée provenant du PA

8. Une méthode selon la revendication 7, où l'envoi de données de service du type de service désigné est effectué après une durée prédéfinie ; cette méthode comprenant en outre :
l'envoi d'une trame sans fil désignée vers la STA, où la trame sans fil désignée est utilisée pour ordonner à la STA d'envoyer des données de service du type désigné après l'écoulement d'une durée désignée à partir de la réception de la trame sans fil.

9. Une méthode selon la revendication 7, où les informations de notification transportent des informations de priorité permettant d'indiquer la priorité des données de service du type de service désigné parmi différents types de services désignés, où les informations de priorité sont utilisées pour indiquer la priorité d'attribution de la ressource de transmission sans fil pour les données de service parmi des données de service de priorités différentes.

10. Un appareil de traitement de transmission de données de service, appliqué à une Station, STA, d'un réseau local sans fil, WLAN, et comprenant un composant d'acquisition (20), configuré pour recevoir des données d'alerte provenant d'une couche supérieure et générer des données de service devant être envoyées par la STA, où les données de service sont d'un type de service désigné, et les données de services du type de service désigné sont des données de service d'urgence ;
un composant d'envoi (22), configuré pour envoyer des d'informations de notification vers un Point d'Accès, PA, du WLAN, où les informations de notification sont utilisées pour ordonner au PA d'attribuer une ressource de transmission sans fil pour l'envoi de données de service du type de service désigné ; et
un composant de réception (24), configuré pour recevoir un message de réponse du PA, **caractérisé en ce que** le
le message de réponse est utilisé pour ordonner à la STA d'envoyer les données de service du type de service désigné selon une condition prédéfinie,
où la condition prédéfinie inclut au moins un des points suivants :
l'envoi de données de service du type de service désigné après l'écoulement d'un second espace intertrame prédéfini à partir de la réception du message de réponse ;
l'envoi de données de service du type de service désigné après une période de temps prédéfinie ;
l'envoi de données de service du type de service désigné après réception d'une trame sans fil désignée provenant du PA

11. L'appareil selon la revendication 10, où le composant d'envoi (22) comprend :
un élément de détermination (220) configuré pour déterminer un canal de transmission pour l'envoi de données de service du type de service désigné ;
un élément de détection (222), configuré pour détecter l'état du canal de transmission ;
un premier élément d'envoi (224), configuré pour envoyer des informations de notification vers le PA lorsque l'élément de détection détecte que l'état du canal est inactif. Le premier élément d'envoi (224) est configuré pour envoyer des informations de notification vers le PA lorsque l'état du canal est détecté comme étant inactif pendant une période de temps désignée et/ou une période de temps aléatoire.

12. L'appareil selon la revendication 10, où le composant d'envoi (22) comprend :
un élément de réception (226), configuré pour recevoir une trame sans fil envoyée par le PA ;
un deuxième élément d'envoi (228), configuré pour envoyer les informations de notification vers le PA après l'écoulement d'un premier espace intertrame à partir de la réception de la trame sans fil.

13. L'appareil selon la revendication 10, où le composant d'envoi (22) comprend :
un élément d'acquisition (30), configuré pour acquérir un créneau temporel désigné du PA ;
un troisième élément d'envoi (32), configuré pour envoyer les informations de notification vers le PA après le créneau temporel désigné.

14. Un appareil de transmission de données de service, appliqué à un Point d'Accès, AP, d'un réseau local sans fil, WLAN, et comprenant :
un composant de réception (50), configuré pour recevoir des informations de notification d'une Station, STA, du WLAN, où les informations de notification sont utilisées pour ordonner au PA d'attribuer une ressource de transmission sans fil pour l'envoi de données de service d'un type de service désigné ; et où les données de service du type de service désigné sont des données de service d'urgence ;
un composant d'attribution (52), configuré pour attribuer, selon les informations de notification, une ressource de transmission sans fil pour l'envoi de données de service du type de service désigné ; et
un composant d'envoi (54), configuré pour envoyer un message de réponse des informations de notification vers la STA, **caractérisé en ce que** le message de réponse est utilisé pour ordonner à la STA d'envoyer les données de service du type de service désigné selon une condition prédéfinie, où la condition prédéfinie inclut au moins un des points suivants :
l'envoi de données de service du type de service désigné après l'écoulement d'un second espace intertrame prédéfini à partir de la réception du message de réponse ;
l'envoi de données de service du type de service désigné après une période de temps prédéfinie ;
l'envoi de données de service du type de service désigné après réception d'une trame sans fil désignée provenant du PA.
